# EUROPÄISCHE PATENTSCHRIFT

(11) **EP 1 322 555 B1**
(45) Veröffentlichungstag und Bekanntmachung des Hinweises auf die Patenterteilung: **29.06.2016**
(21) Anmeldenummer: 01962973.2
(22) Anmeldetag: 27.08.2001
(51) Int. Cl.: C01G 49/08

(54) **VERFAHREN ZUR HERSTELLUNG VON SILICIUMARMEN MAGNETITEN**
MAGNETITES THAT ARE LOW IN SILICON
PROCEDE POUR PRODUIRE DES MAGNETITES A FAIBLE TENEUR EN SILICIUM

(30) Priorität: 08.09.2000 DE 10044397
(43) Veröffentlichungstag der Anmeldung: 02.07.2003
(73) Patentinhaber: LANXESS Deutschland GmbH, 50569 Köln (DE)
(72) Erfinder: MEISEN, Ulrich, 53925 Kall (DE)
(86) Internationale Anmeldenummer: PCT/EP2001/009847
(87) Internationale Veröffentlichungsnummer: WO 2002/020409

(56) Entgegenhaltungen:
- EP-A- 1 048 619
- DE-A- 19 702 431
- CHEMICAL ABSTRACTS, vol. 121, no. 10, 1993 Columbus, Ohio, US; abstract no. 112617, LIU, YING; WEI, GAO; WANG, JIANHUA: "Preparation of superfine Fe3O4 cubic powders" XP002185226 & J. BEIJING INST. TECHNOL. (ENGL. ED.), Bd. 2, Nr. 1, 1993, Seiten 98-102,
- CHEMICAL ABSTRACTS, vol. 70, no. 26, 1969 Columbus, Ohio, US; abstract no. 116696, NAKANO KENJI: "Manufacturing of FeO.Fe2O3" XP002185227 & JP 43 026386 B (NAKANO KENJI) 13. November 1968 (1968-11-13)

## Beschreibung

Diese Erfindung betrifft Magnetitteilchen, Verfahren zu deren Herstellung und deren Verwendung bei der Herstellung von Tonern.

Teilchenförmige Magnetite, die durch ein Fällverfahren aus wässrigen Lösungen hergestellt werden sind seit langem bekannt. Fireman erhielt im Jahre 1905 bereits ein Patent (US-A 802 928) in dem er die Herstellung von Magnetit durch Fällung von Eisen-II-sulfat mit einer alkalischen Komponente und anschließender Oxidation mit Luft beschreibt. Ausgehend von dieser Basiserfindung wurden seit dem zahlreiche Patente zur Herstellung von Magnetiten nach dem Fällungverfahren erteilt.

Diese Materialien fanden zunächst zur Herstellung von Farben aller Art Anwendung. Der besondere Vorteil von Magnetiten gegenüber organischen Farbstoffen und Ruß liegt in seiner sehr viel besseren Wetterbeständigkeit, so dass derartige Farben auch im Außenbereich angewendet werden können. Weiterhin werden Fällungsmagnetite zur Einfärbung von Betonformteilen, wie Betonpflastersteinen oder Betondachsteinen. Seit geraumer Zeit werden Magnetite auch in der Elektrophotografie zur Herstellung von Tonern eingesetzt. Zur Herstellung von Tonern für Kopiergeräte mit Einkomponententonern werden besonders bevorzugt Magnetite die nach dem Fällungsverfahren hergestellt wurden eingesetzt. Der hierfür eingesetzte magnetische Toner muss verschiedene allgemeine Eigenschaften aufweisen. Mit fortschreitender Entwicklung und Verbesserung der Kopiergeräte und Drucker wurden die Anforderungen an den magnetischen Toner und folglich an den hierfür verwendeten Magnetit immer höher. Die neueste Druckergeneration erreicht eine Auflösung von mehr als 400 dpi (Punkte pro Zoll), was zur Entwicklung feinteiliger Toner mit sehr enger Teilchengrößenverteilung geführt hat. Dies hat zur Folge, dass die hierfür erforderlichen Magnetite eine sehr enge Teilchengrößenverteilung aufweisen müssen.

Weiter ist eine bestimmte Teilchengröße erforderlich, so dass eine homogene Verteilung der Magnetitteilchen im fertigen Toner gewährleistet ist. Die Magnetite selbst müssen einen ausreichend hohen elektrischen Widerstand haben um das latente Bild während der elektrostatischen Übertragung zu stabilisieren. Weiterhin müssen Koerzitivkraft, Sättigungsmagnetisierung und vor allem die remanente Magnetisierung im richtigen Verhältnis zu den in der Maschine herrschenden Feldstärken sein. Es ist also erforderlich für jede Klasse von Kopiergeräten Toner und damit Magnetite mit speziellen Eigenschaften zu entwickeln.

Ziel der vorliegenden Erfindung ist es also, ein Verfahren zur Herstellung eines feinteiligen, würfelförmigen, Si-annen Magnetits mit einer mittleren Teilchengröße von 0,1 bis 0,3 µm bereitzustellen. Derartige Si-arme würfelförmige Magnetite eignen sich besonders für den Einsatz in Laserdruckern der neuesten Generation (z.B. HP Laserjet 4000). Für diesen Anwendungszweck werden von den Druckerherstellern eine bestimmte Eigenschaftskombination gefordert:
- Koerzitivkraft ca. 100 Oe
- remanente Magentisierung 13 bis 20 nTm³/g
- Würfelform
- Teilchengröße 0,1 bis 0,3 µm
- BET-Oberfläche ca 7 m²/g
- pH-Wert (des Pulvers) neutral bis leicht alkalisch
- Schüttdichte im mittleren Bereich (für Magnetite) d.h. etwas unter 1 g/cm³

Diese Magnetite sind aufgrund ihrer Eigenschaften für den Einsatz in Farben zur Einfärbung von Papier, Kunststoff, Lacken, Fasern und Beton ebenso geeignet, wie zur Herstellung von magnetischen Tonern.

Reine Fällungsmagnetite ohne Zusatz von Fremdelemente können nach DE-A 3 209 469 diskontinuierlich oder nach DE-A 2 618 058 kontinuierlich hergestellt werden. Bei den oben genannten Patenten wird FeSO₄ als Eisen-II-salz eingesetzt. Es ist jedoch auch möglich zur Herstellung eines Magnetits nach dem Fällungsverfahren jegliches lösliche Eisen-II-salz einzusetzen. Insbesondere kommt hier der Einsatz von FeCl₂, wie in DE-A 3 004 718 beschrieben, in Frage. Der Einsatz von FeSO₄ oder FeCl₂ hat den Vorteil, dass beide Stoffe in großen Mengen sehr preiswert als Abfallstoffe der eisenverarbeitenden Industrie bezogen werden können. Als Fällungsmittel kommt neben dem am häufigsten eingesetzten Natriumhydroxid auch CaO oder CaCO₃ (DE-A 3 004 718), Ammoniak (DE-A 2 460 493) oder Na₂CO₃, MgCO₃ oder MgO (EP-A 0 187 331) verwendet werden. Als Oxidationsmittel wird in der Regel Luft eingesetzt. Es werden jedoch auch Verfahren zur Oxidation mit Nitraten (DD-A 216 040 und DD-A 284 478) beschrieben.

Generell ist die Herstellung von Magnetiten ohne Dotierungen beschrieben und von Kiyama (Bull Chem. Soc. Japan, 47(7), 1974, 1646-50) gut beschrieben. Eine genaue Anweisung, wie die in der Aufgabenstellung geforderten Magnetite herzustellen sind, ist hier jedoch nicht zu finden.

In EP 1048619 A1 wird ein Verfahren zur Herstellung von Fällungsmagnetit unter Zugabe einer Silikatkomponente beschrieben. Auch in der DE19702431 wird ein Verfahren zur Herstellung von Fällungsmagnetit unter Zugabe einer Silikatkomponente offenbart. Ying et.al., J. Beijing Inst. Technol. (Engl. Ed.) 1993, 2(1), 98-102 und JP43026386 B offenbaren Verfahren zur Herstellung würfelförmiger Hämatitpartikel ohne Zugabe einer Silikatkomponente. 15

Die Teilchengröße und Teilchenform der Magnetite kann durch den Fällungs-pH gesteuert werden. Bei hohen pH-Werten und entsprechend niedrigen Werten für das Verhältnis Fe-II/NaOH (kleiner als 0,47) erhält man Oktaeder. Diese Teilchen haben die relativ höchste Koerzitivkraft und Remanenz. In einem sehr schmalen Bereich des Fe-II/NaOH-Verhältnisses, bei etwa 0,47 zu 0,49 in Abhängigkeit von der Temperatur, entstehen würfelförmige Teilchen.

Durch geeignete Auswahl der verfahrenstechnischen Parameter ist es möglich, die anderen geforderten Eigenschaften einzustellen. Ein weiterer wichtiger Einflussfaktor bei der Herstellung von Fällungsmagnetiten ist das Oxidationsmittel. Im Falle von Luftsauerstoff hängt die Effizienz von der Verteilung der Luftblasen in der Suspension ab. Generell nimmt mit steigendem Luftstrom die Tendenz zur Bildung des thermodynamisch stabileren Goethits zu. Will man feinteilige Magnetite herstellen, so ist es erforderlich ein Verfahren zu entwickeln, dass alle oben aufgeführten Tatsachen berücksichtigt. Weiterhin ist wichtig, dass eventuelle Zusätze (z.B. Si oder andere Metalle) die Bildungstemdenz von Magnetit stark verschieben können.

Die zu lösende Aufgabe umfasst daher auch ein Verfahren zur Herstellung eines Magnetiten zu entwickeln, der speziell für die Anwendung in feinteiligen Einkomponententonern geeignet ist. Ein derartiger Magnetit muss neben einer geringen Teilchengröße (ca. 0,2 µm) eine genau spezifizierte Remanenz, eine genau definierte Koerzitivkraft und eine ausreichend hohe Temperaturstabilität aufweisen. Der Magnetit muss weiterhin eine enge Teilchengrößenverteilung aufweisen.

Diese komplexe Aufgabenstellung konnte durch die Bereitstellung des erfindungsgemäßen Verfahrens gelöst werden. Es umfasst folgende Schritte:
1. Vorlegen einer alkalischen Komponente unter Schutzgasdurchleitung
2. Erwärmen dieser Mischung unter Rühren auf Fälltemperatur
3. Zudosieren einer Eisen-II-Komponente
4. Erwärmen auf Reaktionstemperatur
5. Oxidieren mit einem Oxidationsmittel bis zu einem Fe-III-Gehalt von mehr als 65 mol-%.

Gegenstand der Erfindung ist daher ein Verfahren zur Herstellung eines Si-armen Magnetits mit würfelförmigem Habitus, mit einer mittleren Teilchengröße (nach transmissions-mikroskopischen Aufnahmen bei einer Vergrößerung von 33 000-fach bestimmt) von 0,1 bis 0,3 µm, mit einer spezifischen Oberfläche von 6 bis 9 m²/g, einer Koerzitivkraft (gemessen bei einer Feldstärke von 5000 Oe = 397,9 KA/m) von 80 bis 110 Oe (6 366 KA/m bis 8 754 KA/m), einer remanenten Magnetisierung von 13 bis 20 nTm³/g, einem pH-Wert von 7 bis 10 und einer Schüttdichte von 0,6 bis 0,9 g/cm³ dadurch gekennzeichnet, dass:
a. Eine alkalischen Komponente in Form einer wässrigen Lösung unter Schutzgas vorgelegt wird.
b. auf eine Fälltemperatur von 65 bis 85°C, bevorzugt auf 70 bis 80°C aufgeheizt wird.
c. eine Eisen-II-komponente mit einer Fe-Konzentration von 55 bis 105 g/l Fe, bevorzugt 71 bis 97 g/l Fe und einem Fe-III-Gehalt von 0,2 bis 1,5 mol-% Fe-III, bevorzugt 0,5 bis 1,0 mol-% Fe-III mit einer Geschwindigkeit von 0,25 bis 1,5 mol Fe/h*mol NaOH bis zu einem pH-Wert der Suspension gemessen bei der Fälltemperatur von 8,0 bis 9,7 bevorzugt 8,5 bis 9,5 zugegeben wird.
d. die Oxidation der Suspension mit einem Oxidationsmittel mit einer Geschwindigkeit von 7 bis 25 mol-% Fe-II/h bevorzugt 11 bis 23 mol-% Fe-II/h bis zu einem Fe-III-Gehalt von 65 bis 75 mol-% Fe-III durchgeführt wird.

Als alkalische Komponente kann ein Alkalihydroxid, ein Erdalkalihydroxid, ein Erdalkalioxid, ein Alkalicarbonat, MgCO₃ oder Ammoniak eingesetzt werden. Eisen-II wird typischerweise in Form einer wasserlöslichen Fe-II-Komponente eingesetzt, wobei besonders bevorzugt FeSO₄ oder FeCl₂ Anwendung finden. Es ist jedoch auch möglich, andere wasserlösliche Fe-II-Verbindungen einzusetzen, wenn diese zu vergleichbaren Preisen anstehen. Als Oxidationsmittel können Luftsauerstoff, reiner Sauerstoff, H₂O₂, Alkalimetallchlorate(V), Alkalimetallchlorate(VII), Chlor oder Nitrate eingesetzt werden. Besonders bevorzugt werden Luftsauerstoff, reiner Sauerstoff, H₂O₂ oder Natriumnitrat eingesetzt. Bei der Oxidation ist zu beachten, dass die Oxidationsgeschwindigkeit nicht zu hoch gewählt wird, da dann unerwünschtes α-FeOOH als zweite Verbindung gebildet wird. Die Oxidationsgeschwindigkeit sollte zwischen 25 und 7 mol-% Fe-II/h liegen. Diese Oxidation bezieht sich auf einen stöchiometrischen Magnetit mit 33,3 mol-% Fe-II.

Um aus einer reinen Fe-II-Lösung einen derartigen Magnetit herzustellen sind also nur 66,6 % des Fe-II zum Fe-III zu oxidieren. Wird eine Charge mit 10 mol Fe-II-sulfat also in 5 h zum Magnetit oxidiert, so ergibt sich eine Oxidationsgeschwindigkeit von 20 mol-% Fe-II/h, da die zu oxidierende Fe-II-Menge bei 6,66 mol liegt.

Eine besonders bevorzugte Ausführungsform zur Herstellung des beanspruchten Magnetits ist folgende:
Natronlauge mit einem Gehalt von 300 g NaOH pro Liter wird in einem diskontinuierlichen Rührkessel unter Rühren und Schutzgasdurchleitung vorgelegt. Anschließend wird auf die angestrebte Fälltemperatur aufgeheizt. Ist die Fälltemperatur erreicht, so wird mit einer Eisen-II-Salzlösung (z.B. FeSO₄ gefällt, bis der angestrebte pH-Wert erreicht ist. Die Fälltemperatur liegt dabei zwischen 65 und 85°C bevorzugt zwischen 70 und 80°C. Als Eisen-II-komponente wird FeSO₄- oder FeCl₂-Lösung eingesetzt. Diese Lösung hat einen Fe-Gehalt von 55 bis 105 g Fe/1 bevorzugt 71 bis 97 g Fe/1. Der Fe-III-Gehalt der Lösung liegt zwischen 0,2 und 1,5 mol-% bevorzugt zwischen 0,5 und 1,0 mol-% Fe-III. Der angestrebte pH-Wert liegt zwischen 8,0 und 9,7 bevorzugt zwischen 8,5 und 9,5.

Die Dosierung der Fe-II-Komponente erfolgt mit einer Geschwindigkeit von 0,25 bis 1,5 mol Fe/h*mol NaOH. Nachdem die Zugabe der Menge der Fe-II-Komponente beendet wurde, wird auf Reaktionstemperatur aufgeheizt. In vielen Fällen sind Fälltemperatur und Reaktionstemperatur identisch, so dass ein besonderer Aufheizschritt nicht erforderlich ist. Ist die Reaktionstemperatur erreicht, so wird die Schutzgasbegasung beendet und mit der Zugabe des Oxidationsmittels begonnen. Im Falle einer Luftbegasung wird Luft über eine Begasungsvorrichtung unterhalb des Rührers eingeleitet. Die gewählte Oxidationsgeschwindigkeit liegt zwischen 25 und 7 mol-% Fe-II/h bevorzugt zwischen 11 und 23 mol-% Fe-II/h.

Die Messung der Eigenschaften der fertigen Magnetite erfolgt nach den unten beschriebenen Methoden:
1. Die Magnetwerte (Koerzitivkraft, spezifische Sättigungsmagnetisierung, spezifische remanente Magnetisierung) werden am Probenvibrationsmagnetometer (Hersteller Bayer AG, DE) bei 5000 Oe = 397,9 KA/m Feldstärke gemessen.
2. Die BET-Oberfläche wird nach DIN 66 131 gemessen.
   Gasgemisch: 90 % He, 10 % N₂, Messtemperatur: 77,4 K
   Ausheizen bei 140°C, 60 Minuten.
3. Elementanalyse Si
   Si wird spektralanalytisch durch ICP-OES bestimmt.
4. Elementanalyse Fe, Fe-II, Fe-IlI
   Bestimmungen nach DIN 55 913. Der Fe-II-Gehalt wird durch Titration mit KMnO₄ mittels eines Memotitrators (Mettler DL-70) ermittelt. Fe-III wird analog mit TiCl₃ bestimmt. Der Gesamteisengehalt wird aus den beiden Einzelwerten und der Einwaage errechnet. Die Bestimmung der Gehalte der beiden Maßlösungen erfolgt täglich.
5. Teilchenform, Teilchengröße
   Abschätzung der Teilchengröße- und Form aus einer transmissionsmikroskopischen (TEM) Aufnahmen bei einer Vergrößerung von 33 000.
6. Bestimmung der Schüttdichte
   Die Schüttdichte wird nach EN ISO 787 bestimmt.
7. Bestimmung des pH-Werts (des fertigen Pulvers)
   Die Bestimmung erfolgt nach EN ISO 787-9.

Si-arm im Sinne der Erfindung sind Magnetite mit einem Si-Gehalt von maximal 0,025 Gew.-% , bevorzugt maximal 0,0025 Gew.-%, besonders bevorzugt maximal 0,001 Gew.-%.

### Beispiele

### Beispiel 1

In einen Rührkessel von 100 m³ Nutzvolumen wurden 8 000 kg Natronlauge mit einem Gehalt von 300 g/l, was 200 kmol NaOH entspricht gegeben. Nach Einschalten der Stickstoffbegasung und des Rührers wurde die Lösung wurde auf 75°C aufgeheizt. In 70 Minuten wurden nun 57,5 m³ Eisen-II-sulfatlösung mit einem Gehalt von 92,3 g Fe/l gepumpt. Die Fällgeschwindigkeit betrug demnach 0,407 mol Fe/h*mol NaOH. Der Fe-III-Gehalt der Eisensulfatlösung entsprach 0,53 mol-% Fe-III. Nach Beendigung der Zugabe stellte sich ein pH-Wert von 9.2 (gemessen bei 75°C) ein. Dann wurde die Stickstoffbegasung abgestellt und mit 450 m³/h Luft über einen unter dem Rührer angebrachten Begasungsring begast. Die Begasung wurde nach 270 min abgebrochen nachdem ein Fe-III-Gehalt von 69,4 mol-% erreicht war. Die Oxidationsgeschwindigkeit betrug demnach 22,22 mol-% Fe-II/h.

Nach Beendigung dieser Reaktion wurde die Suspension filtriert, mit vollentsalztem Wasser gründlich gewaschen und in einem Scheibensprühtrockner mit direkter Beheizung durch Erdgas getrocknet. Vor der Trocknung wurde die Suspension mit vollentsalztem Wasser auf 350 g/l Fe₃O₄ angemaischt und mit einem Durchsatz von 1500 Liter pro Stunde getrocknet. Durch Einstellung des Brenners wurde die Gasaustrittstemperatur auf 115°C eingestellt. Die mittlere Verweilzeit betrug 2 Sekunden. Das erhaltene Pulver wurde in einer Prallmühle gemahlen.

Der erhaltene Magnetit hatte folgende Eigenschaften:

| | |
|---|---|
| Si-Gehalt: | 0,001 Gew.-% Si |
| Koerzitivkraft: | 103 Oe = 8,19 kA/m |
| spez. Remanenz: | 193 Gcm³/g = 19,3 nTm³/g |
| spez. Sättigungsmagentisierung: | 1091 Gcm³/g = 109,1 nTm³/g |
| Teilchengröße: | 0,2 µm |
| BET-Oberfläche: | 8,2 m²/g |
| pH-Wert: | 8,8 |
| Schüttdichte: | 0,72 g/cm³ |

### Beispiel 2

In einen Rührkessel von 100 m³ Nutzvolumen wurden 8000 kg Natronlauge mit einem Gehalt von 300 g/1, was 200 kmol NaOH entspricht gegeben. Nach Einschalten der Stickstoffbegasung und des Rührers wurde die Lösung wurde auf 75°C aufgeheizt. In 65 Minuten wurden nun 58,43 m³ Eisen-II-sulfatlösung mit einem Gehalt von 90,9 g Fe/l gepumpt. Die Fällgeschwindigkeit betrug demnach 0,444 mol Fe/h*mol NaOH. Der Fe-III-Gehalt der Eisensulfatlösung entsprach 0,62 mol-% Fe-III. Nach Beendigung der Zugabe stellte sich ein pH-Wert von 9,4 (gemessen bei 75°C) ein. Dann wurde die Stickstoffbegasung abgestellt und mit 450 m³/h Luft über einen unter dem Rührer angebrachten Begasungsring begast. Die Begasung wurde nach 300 min abgebrochen nachdem ein Fe-III-Gehalt von 70,5 mol-% erreicht war. Die Oxidationsgeschwindigkeit betrug demnach 20 mol-% Fe-II/h.

Nach Beendigung dieser Reaktion wurde die Suspension filtriert, mit vollentsalztem Wasser gründlich gewaschen und in einem Scheibensprühtrockner mit direkter Beheizung durch Erdgas getrocknet. Vor der Trocknung wurde die Suspension mit vollentsalztem Wasser auf 350 g/l Fe₃O₄ angemaischt und mit einem Durchsatz von 1500 Liter pro Stunde getrocknet. Durch Einstellung des Brenners wurde die Gasaustrittstemperatur auf 115°C eingestellt. Die mittlere Verweilzeit betrug 2 Sekunden. Das erhaltene Pulver wurde in einer Prallmühle gemahlen.

Der erhaltene Magnetit hatte folgende Eigenschaften:

| | |
|---|---|
| Si-Gehalt: | 0,005 Gew.-% Si |
| Koerzitivkraft: | 92 Oe = 7,32 KA/m |
| spez. Remanenz: | 153 Gcm³/g = 15,3 nTm³/g |
| spez. Sättigungsmagentisierung: | 1140 Gcm³/g = 114 nTm³/g |
| Teilchengröße: | 0,2 µm |
| BET-Oberfläche: | 8,0 m²/g |
| pH-Wert: | 7,5 |
| Schüttdichte: | 0,73 g/cm³ |

### Beispiel 3

In einen Rührkessel von 100 m³ Nutzvolumen wurden 7400 kg Natronlauge mit einem Gehalt von 300 g/l, was 185 kmol NaOH entspricht, gegeben. Nach Einschalten der Stickstoffbegasung und des Rührers wurde die Lösung wurde auf 75°C aufgeheizt. In 103 Minuten wurden nun 52,0 m³ Eisen-II-sulfatlösung mit einem Gehalt von 96,7 g Fe/l gepumpt. Die Fällgeschwindigkeit betrug demnach 0,282 mol Fe/h*mol NaOH. Der Fe-III-Gehalt der Eisensulfatlösung entsprach 0,99 mol-% Fe-III. Nach Beendigung der Zugabe stellte sich ein pH-Wert von 8,0 (gemessen bei 75°C) ein. Dann wurde die Stickstoffbegasung abgestellt und mit 450 m³/h Luft über einen unter dem Rührer angebrachten Begasungsring begast. Die Begasung wurde nach 540 min abgebrochen nachdem ein Fe-III-Gehalt von 71,0 mol-% erreicht war. Die Oxidationsgeschwindigkeit betrug demnach 11,11 mol-% Fe-II/h.

Nach Beendigung dieser Reaktion wurde die Suspension filtriert, mit vollentsalztem Wasser gründlich gewaschen und in einem Scheibensprühtrockner mit direkter Beheizung durch Erdgas getrocknet. Vor der Trocknung wurde die Suspension mit vollentsalztem Wasser auf 350 g/l Fe₃O₄ angemaischt und mit einem Durchsatz von 1500 Liter pro Stunde getrocknet. Durch Einstellung des Brenners wurde die Gasaustrittstemperatur auf 120°C eingestellt. Die mittlere Verweilzeit betrug 1 Sekunde. Das erhaltene Pulver wurde in einer Prallmühle gemahlen.

Der erhaltene Magnetit hatte folgende Eigenschaften:

| | |
|---|---|
| Si-Gehalt: | 0,011 Gew.-%Si |
| Koerzitivkraft: | 94 Oe = 7,48 KA/m |
| spez. Remanenz: | 160 Gcm³/g =16 nTm³/g |
| spez. Sättigungsmagentisierung: | 1090 Gcm³/g =109 nTm³/g |
| Teilchengröße: | 0,2 µm |
| BET-Oberfläche: | 7,1 m²/g |
| pH-Wert: | 8,7 |
| Schüttdichte: | 0,84 g/cm³ |

## Patentansprüche

1. Verfahren zur Herstellung eines Magnetits mit einem Si-Gehalt von maximal 0,025 Gew.-% mit würfelförmigem Habitus, mit einer mittleren Teilchengröße (nach transmissionsmikroskopischen Aufnahmen bei einer Vergrößerung von 33 000-fach bestimmt) von 0,1 bis 0,3 µm, mit einer spezifischen Oberfläche von 6 bis 9 m²/g, einer Koerzitivkraft (gemessen bei einer Feldstärke von 5000 Oe = 397,9 KA/m) von 80 bis 110 Oe (6,366 KA/m bis 8,754 KA/m), einer remanenten Magnetisierung von 13 bis 20 nTm³/g, einem pH-Wert von 7 bis 10 und einer Schüttdichte von 0,6 bis 0,9 g/cm³ **dadurch gekennzeichnet dass**:
a. Eine alkalischen Komponente in Form einer wässrigen Lösung unter Schutzgas vorgelegt wird,
b. auf eine Fälltemperatur von 65 bis 85°C, bevorzugt auf 70 bis 80°C aufgeheizt wird,
c. eine Eisen-II-komponente mit einer Fe-Konzentration von 55 bis 105 g/l Fe, bevorzugt 71 bis 97 g/l Fe und einem Fe-III-Gehalt von 0,2 bis 1,5 mol-% Fe-III, bevorzugt 0,5 bis 1,0 mol-% Fe-111 mit einer Geschwindigkeit von 0,25 bis 1,5 mol Fe/h*mol NaOH bis zu einem pH-Wert der Suspension gemessen bei der Fälltemperatur von 8,0 bis 9,7 bevorzugt 8,5 bis 9,5 zugegeben wird und
d. die Oxidation der Suspension mit einem Oxidationsmittel mit einer Geschwindigkeit von 7 bis 25 mol-% Fe-II/h bevorzugt 11 bis 23 mol-% Fe-II/h bis zu einem Fe-III-Gehalt von 65 bis 75 mol-% Fe-III durchgeführt wird.

2. Verfahren gemäß Anspruch 1, **dadurch gekennzeichnet, dass** die Trocknung aus der wässrigen Aufschlämmung erfolgt und bevorzugt ein Sprühtrockner als Trocknungsapparat benutzt wird.

3. Verfahren gemäß Ansprüchen 1 und 2, **dadurch gekennzeichnet, dass** die Trocknungstemperatur gemessen am Gasaustritt des Trockners bei 100 bis 150°C, bevorzugt bei 110 bis 130°C liegt.

4. Verfahren gemäß Ansprüchen 1 bis 3, **dadurch gekennzeichnet, dass** die mittlere Verweilzeit bei der Trocknung weniger als 5 Sekunden beträgt.

5. Verfahren gemäß Ansprüchen 1 bis 4, **dadurch gekennzeichnet, dass** als alkalische Komponente Ammoniak, Alkalimetallhydroxide, Erdalkalimetallhydroxide, Alkalimetallcarbonate oder MgCO₃ eingesetzt wird.

6. Verfahren gemäß Ansprüchen 1 bis 5, **dadurch gekennzeichnet, dass** als Oxidationsmittel Luftsauerstoff, H₂O₂, Chlor, Alkalimetallchlorate oder Nitrate eingesetzt werden.

7. Verwendung des gemäß Ansprüchen 1 bis 6 erhältlichen Magnetits zur Herstellung von Tonern.

8. Verwendung des gemäß Ansprüchen 1 bis 6 erhältlichen Magnetits zur Einfärbung von Beton, Kunststoffen, Papier oder zur Herstellung von Farben und Lacken.

## Claims

1. Method for the preparation of a magnetite which has an Si content of not more than 0.025% by weight and has a cubic habit, a mean particle size (determined according to transmission electron micrographs at a magnification of 33 000 times) of 0.1 to 0.3 µm, a specific surface area of 6 to 9 m²/g, a coercive force (measured at a field strength of 5 000 Oe = 397.9 KA/m) of 80 to 110 Oe (6.366 KA/m to 8.754 KA/m), a remanent magnetization of 13 to 20 nTm³/g, a pH of 7 to 10 and a bulk density of 0.6 to 0.9 g/cm³, **characterized in that**:
a. an alkaline component in the form of an aqueous solution is initially introduced under inert gas and
b. is heated to a precipitation temperature of 65 to 85°C, preferably to 70 to 80°C,
c. an iron(II) component having an Fe concentration of 55 to 105 g/l of Fe, preferably 71 to 97 g/l of Fe and an Fe(III) content of 0.2 to 1.5 mol% of Fe(III), preferably 0.5 to 1.0 mol% of Fe(III), is added at a rate of 0.25 to 1.5 mol Fe/h.mol NaOH up to a pH of the suspension, measured at the precipitation temperature, of 8.0 to 9.7, preferably 8.5 to 9.5, and
d. the oxidation of the suspension is carried out with an oxidizing agent at a rate of 7 to 25 mol% of Fe(II)/h, preferably 11 to 24 mol% of Fe(II)/h, up to an Fe(III) content of 65 to 75 mol% of Fe(III).

2. Method according to Claim 1, **characterized in that** the drying is effected from the aqueous suspension and a spray dryer is preferably used as the drying apparatus.

3. Method according to Claims 1 and 2, **characterized in that** the drying temperature, measured at the gas outlet of the dryer, is 100 to 150°C, preferably 110 to 130°C.

4. Method according to any of Claims 1 to 3, **characterized in that** the average residence time during the drying is less than 5 seconds.

5. Method according to any of Claims 1 to 4, **characterized in that** ammonia, alkali metal hydroxides, alkali earth metal hydroxides, alkali metal carbonates or MgCO₃ are used as the alkaline component.

6. Method according to any of Claims 1 to 5, **characterized in that** atmospheric oxygen, H₂O₂, chlorine, alkali metal chlorates or nitrates are used as the oxidizing agent.

7. Use of the magnetite obtainable according to any of Claims 1 to 6 for the preparation of toners.

8. Use of the magnetite obtainable according to any of Claims 1 to 6 for coloring concrete, plastics or paper or for the production of paints and finishes.

## Revendications

1. Procédé de fabrication d'une magnétite ayant une teneur en Si d'au plus 0,025 % en poids, de morphologie cubique, présentant une taille de particule moyenne (déterminée par des images de microscopie en transmission à un agrandissement de 33 000 fois) de 0,1 à 0,3 µm, présentant une surface spécifique de 6 à 9 m²/g, une force coercitive (mesurée à une puissance de champ de 5 000 Oe = 397,9 KA/m) de 80 à 110 Oe (6,366 KA/m à 8,754 KA/m), une magnétisation rémanente de 13 à 20 nTm³/g, un pH de 7 à 10 et une densité apparente de 0,6 à 0,9 g/cm³, **caractérisé en ce que** :
a. un composant alcalin sous la forme d'une solution aqueuse est chargé sous un gaz protecteur,
b. porté à une température de précipitation de 65 à 85 °C, de préférence de 70 à 80 °C,
c. un composant fer II ayant une concentration en Fe de 55 à 105 g/l de Fe, de préférence de 71 à 97 g/l de Fe, et une teneur en Fe III de 0,2 à 1,5 % en moles de Fe III, de préférence de 0,5 à 1,0 % en moles de Fe III, est ajouté à une vitesse de 0,25 à 1,5 mole de Fe/h*mole de NaOH jusqu'à un pH de la suspension mesuré à la température de précipitation de 8,0 à 9,7, de préférence de 8,5 à 9,5, et
d. l'oxydation de la suspension est réalisée avec un oxydant à une vitesse de 7 à 25 % en moles de Fe II/h, de préférence de 11 à 23 % en moles de Fe II/h, jusqu'à une teneur en Fe III de 65 à 75 % en moles de Fe III.

2. Procédé selon la revendication 1, **caractérisé en ce que** le séchage a lieu à partir de la suspension aqueuse et un séchoir à pulvérisation est utilisé de préférence en tant qu'appareil de séchage.

3. Procédé selon les revendications 1 et 2, **caractérisé en ce que** la température de séchage mesurée à la sortie de gaz du séchoir est de 100 à 150 °C, de préférence de 110 à 130 °C.

4. Procédé selon les revendications 1 à 3, **caractérisé en ce que** le temps de séjour moyen lors du séchage est de moins de 5 secondes.

5. Procédé selon les revendications 1 à 4, **caractérisé en ce que** de l'ammoniac, des hydroxydes de métaux alcalins, des hydroxydes de métaux alcalino-terreux, des carbonates de métaux alcalins ou du MgCO₃ sont utilisés en tant que composant alcalin.

6. Procédé selon les revendications 1 à 5, **caractérisé en ce que** de l'oxygène de l'air, du H₂O₂, du chlore, des chlorates de métaux alcalins ou des nitrates sont utilisés en tant qu'oxydant.

7. Utilisation de la magnétite pouvant être obtenue selon les revendications 1 à 6 pour la fabrication d'argiles.

8. Utilisation de la magnétite pouvant être obtenue selon les revendications 1 à 6 pour la coloration de béton, de plastiques, de papier, ou pour la fabrication de peintures et de vernis.
